Europäisches Patentamt

European Patent Office

Office européen des brevets

(19)

(11) Numéro de publication: **0 262 057**
**A1**

(12) **DEMANDE DE BREVET EUROPEEN**

(21) Numéro de dépôt: 87420237.7

(22) Date de dépôt: **11.09.87**

(51) Int. Cl.⁴: **B 25 J 21/00**
**G 21 F 7/04**

(30) Priorité: **17.09.86 FR 8613193**

(43) Date de publication de la demande:
**30.03.88 Bulletin 88/13**

(84) Etats contractants désignés: **DE ES GB IT NL**

(71) Demandeur: **Guilbaud, Jean-Pierre**
**Les Sables Briennon**
**F-42720 Pouilly-sous-Charlieu (FR)**

**Michel, Georges**
**14 Chemin de l'Eperon**
**F-13009 Marseille (FR)**

(72) Inventeur: **Guilbaud, Jean-Pierre**
**Les Sables Briennon**
**F-42720 Pouilly-sous-Charlieu (FR)**

**Michel, Georges**
**14 Chemin de l'Eperon**
**F-13009 Marseille (FR)**

(74) Mandataire: **Laurent, Michel et al**
**Cabinet LAURENT et GUERRE B.P. 32**
**F-69131 Ecully Cedex (FR)**

(54) Installation pour la manipulation d'un objet sous atmosphère controlée.

(57) Installation pour la manipulation d'un objet (15) sous atmosphère contrôlée comprenant :
. une enceinte (1) de traitement sous atmosphère contrôlée,
. un bras de manipulation (13) dudit objet (15) dans ladite enceinte (1),
caractérisée en ce que ladite enceinte (1) est fermée par un joint liquide (24,25) formant siphon dans lequel passe le bras (13) de manipulation dont tous les organes de commande (11,21,33) sont situés en dehors de l'enceinte (1).

FIG. 1

**Description**

### INSTALLATION POUR LA MANIPULATION D'UN OBJET SOUS ATMOSPHERE CONTROLEE.

L'invention concerne une installation pour la manipulation d'un objet sous atmosphère contrôlée, notamment pour le transfert de cet objet d'un poste de traitement, physique et/ou chimique, notamment hors poussière, vers un autre poste de traitement.

Il est bien connu d'effectuer des manipulations sur des objets de toute nature sous atmosphère contrôlée, notamment hors poussière afin d'éviter des phénomènes de pollution, d'oxydation, etc. De tels procédés sont largement répandus dans l'industrie nucléaire, en médecine, dans la biotechnologie ou dans l'industrie alimentaire.

Le plus généralement, la manipulation de l'objet dans l'enceinte sous atmosphère contrôlée s'effectue grâce à un bras manipulateur, ce qui n'est pas sans poser des problèmes d'étanchéité de plus en plus complexes.

Dans le document US-A-3,166,133, on a décrit un dispositif permettant de travailler en atmosphère confinée dont on assure l'étanchéité grâce à un joint liquide formé dans une couronne annulaire. Cette solution qui donne d'excellents résultats pour le pesage ne permet malheureusement qu'un déplacement vertical. De la sorte, elle n'est pas adaptée à la manipulation dans plusieurs directions d'un objet dans une enceinte confinée.

L'invention pallie ces inconvénients. Elle vise une installation du genre en question qui soit facile à construire, économique, et présente une excellente étanchéité, notamment aux poussières et aux germes.

Cette installation pour la manipulation d'un objet sous atmosphère contrôlée comprenant :
. une enceinte de traitement sous atmosphère contrôlée,
. un bras de manipulation dudit objet dans ladite enceinte, animé d'un mouvement selon au moins deux degrés de liberté,
et dans laquelle ladite enceinte est fermée par un joint liquide formant siphon,
se caractérise :
- en ce que tous les organes de commande et de guidage du bras de manipulation sont situés à l'extérieur de l'enceinte ;
- et en ce que le joint liquide est formé dans un récipient dans lequel plonge un conduit relié à l'enceinte et à travers lequel passe le bras de manipulation.

En d'autres termes, l'installation conforme à l'invention se distingue des solutions connues essentiellement par la combinaison de deux caractéristiques connues par ailleurs, à savoir :
- d'une part, le fait que tous les organes de commande et de guidage du bras sont situés à l'extérieur de l'enceinte, ce qui évite d'introduire dans cette enceinte de nouvelles sources et de nouvelles causes de pollution ;
- d'autre part, par le fait que l'enceinte est reliée au joint liquide formant siphon par un conduit dans lequel passe le bras de manipulation, ce qui assure un parfait confinement de l'enceinte lors des manipulations du bras.

Avantageusement, en pratique :
- le récipient où est formé le joint liquide et dans lequel plonge le conduit solidaire de l'enceinte est fixe, et le bras est animé d'un mouvement de translation selon deux degrés de liberté (X,Y) ou plus ;
- le récipient où est formé le joint liquide et dans lequel plonge le conduit solidaire de l'enceinte pivote autour d'un axe vertical et l'extrémité du bras de manipulation, disposé en dehors de l'enceinte, est associé à un vérin double effet, fixé sur ledit récipient, de manière à ce que l'ensemble soit animé de deux degrés de liberté X et $\Theta$ ou plus (X,Y,$\Theta$), ce qui permet des rotations sans limitation d'amplitude, ce que ne permet pas la solution décrite dans le document US-A-3,166,133 précité.
- le bras de manipulation comporte un flotteur immergé dans le récipient destiné à maintenir le bras de manipulation en position haute ;
- dans une forme de réalisation avantageuse, le système de commande du bras de manipulation comprend :
. le bras proprement dit définissant une portion verticale immergée dans le récipient à laquelle est fixé le flotteur,
. un axe de guidage vertical également fixé au flotteur,
. un chariot qui comporte des orifices de passage et de guidage pour la portion du bras et l'axe de guidage,
. des moyens (poulies et câbles ou courroies) pour entraîner ce chariot en translation horizontale,
. un moyen destiné à coopérer avec l'extrémité libre (telle que par exemple talon), soit de l'axe de guidage soit du bras pour contrôler la translation verticale du système.

La manière dont l'invention peut être réalisée et les avantages qui en découlent ressortiront mieux des exemples de réalisation qui suivent, donnés à titre indicatif et non limitatif, à l'appui des figures annexées.

La figure 1 est une représentation schématique en coupe d'une première installation conforme à l'invention (translation X, ).

La figure 2 est une représentation en vue perspective sommaire d'un autre mode de réalisation de l'invention (translation X,Y).

La figure 3 est une représentation schématique en coupe d'un troisième mode de réalisation de l'invention alors que la figure 4 est une représentation en perspective sommaire du système de translation XY du bras de manipulation dans la réalisation de la figure 3.

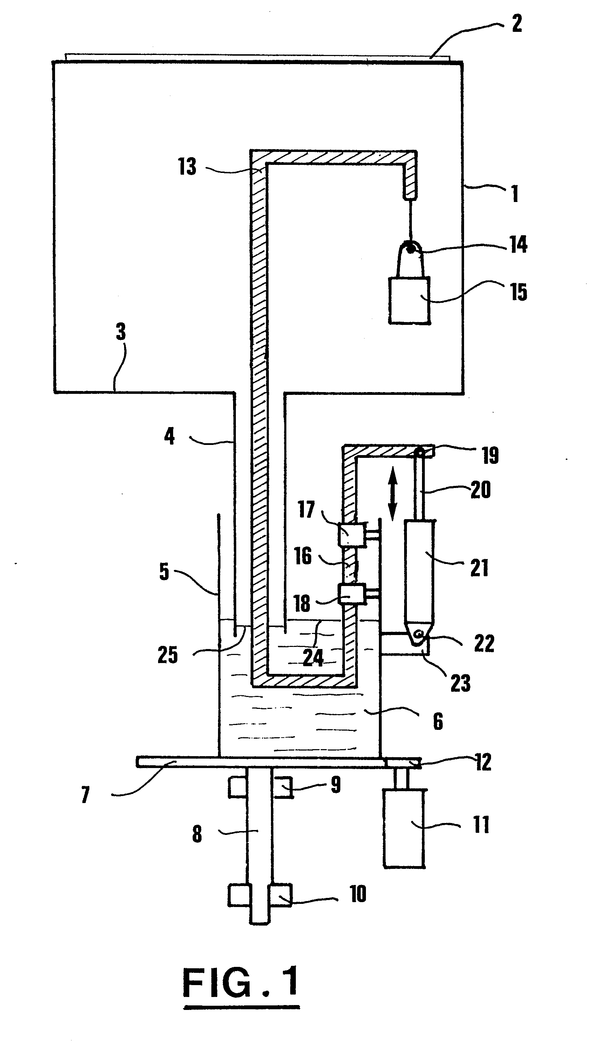

Dans un premier exemple de réalisation montré à la figure 1, l'installation comprend une enceinte de traitement (1) sous atmosphère contrôlée présentant sur le haut une bouche d'amenée (2) du flux laminaire, notamment pour le traitement de l'air, et dont le fond (3) forme plan de travail où reposent les bacs de traitement non représentés. Le fond de cette enceinte (1) comporte un tube vertical (4) qui plonge dans un récipient (5) rempli d'eau (6) formant joint liquide d'étanchéité. Ce récipient (5) est monté décentré sur un plateau tournant (7) monté sur un axe de pivotement (8) tenu par deux paliers respectivement (9) et (10). Un moteur motoréducteur (11) entraîne par un engrenage (12) le plateau (7) en rotation et par voie de conséquence le récipient (5).

Selon une caractéristique fondamentale de l'invention, le bras de manipulation (13), dont l'extrémité disposée à l'intérieur de l'enceinte (1) comporte un crochet (14) ou un organe de préhension sur lequel vient se positionner l'objet (15) à manipuler, passe dans le tube plongeur (4), pénètre dans le récipient (5), plonge dans le liquide (6), ressort en (16) parallèlement à (13) en passant dans deux guides respectivement (17) et (18) de translation. L'extrémité (19) du bras est associée à une tige de vérin (20) d'un vérin à double effet (21) fixé par une chape (22) à une patte de fixation (23) soudée dans la paroi du récipient (5).

Selon la caractéristique fondamentale de l'invention, le liquide (6) forme un siphon comme on le voit nettement sur la figure et par là forme joint d'étanchéité évitant ainsi toute pénétration de poussière ou autre élément de pollution. Le bras de manipulation (13) ne comporte aucun élément de guidage dans l'enceinte (1) ou dans le tube plongeur (4), puisque tous les éléments de guidage (17,18) de commande (11,21) sont disposés en dehors de l'enceinte (1).

Lors du traitement, pour assurer la translation verticale de l'objet (15), on joue sur le vérin (21) à double effet, alors que pour assurer la rotation on fait appel au moteur (11).

Selon l'application envisagée, le liquide de traitement (6) peut ou non être additionné de produits appropriés. De même, l'intérieur de l'enceinte (1) peut être maintenu ou non en surpression ou dépression comme on le voit par le niveau (24,25) du liquide (6) dans le récipient (5).

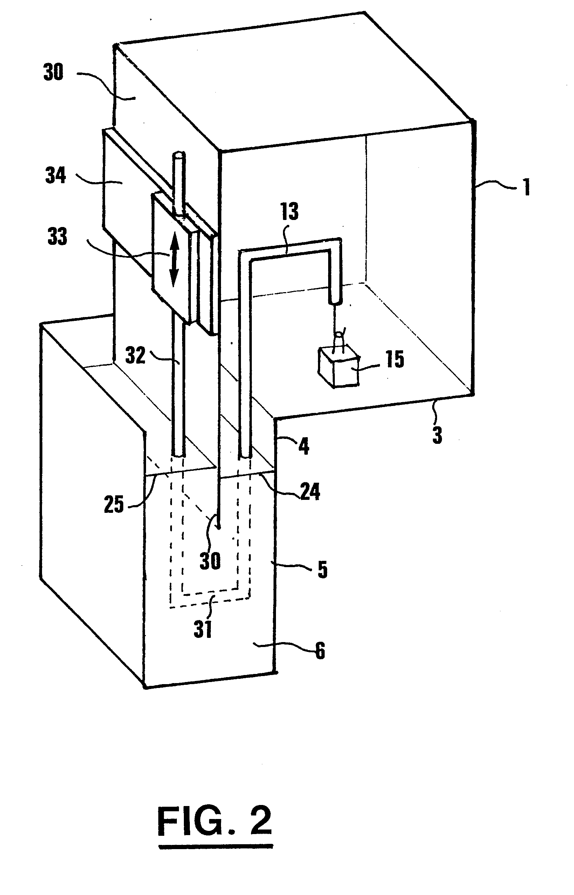

La figure 2 montre une deuxième forme de réalisation de l'invention adaptée à communiquer à l'objet à manipuler deux degrés de liberté X et Y (translation).

Dans cette figure, comme dans les figures suivantes, les mêmes éléments qu'à la figure 1 ont été désignés par les mêmes références. Dans cette forme de réalisation, le récipient (5) est fixe et l'une des parois (30) de l'enceinte (1) pénètre dans le récipient (5) pour former le joint siphon caractéristique (24,25). Dans cette forme de réalisation, le bras de manipulation (13) pénètre dans le liquide (6) du récipient où il forme un U (31) dont la seconde branche (32) est solidaire d'un chariot (33) mobile transversalement sur la poutre (34). Ainsi, en faisant coulisser le chariot (33) sur cette poutre (34) fixée à la paroi (30), on assure à l'objet (15) soit une translation horizontale soit par coulissement dans le chariot (33) dans le sens vertical comme indiqué par la flèche.

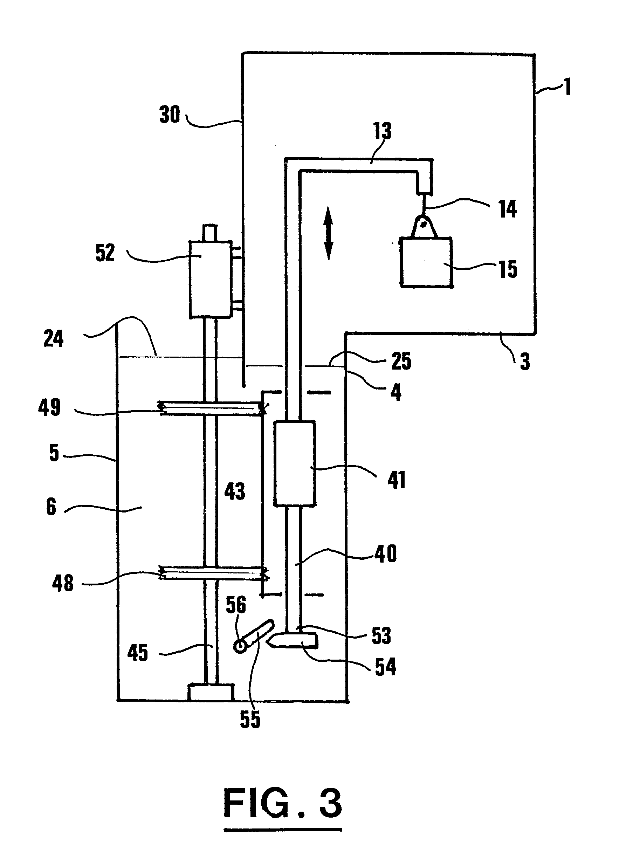

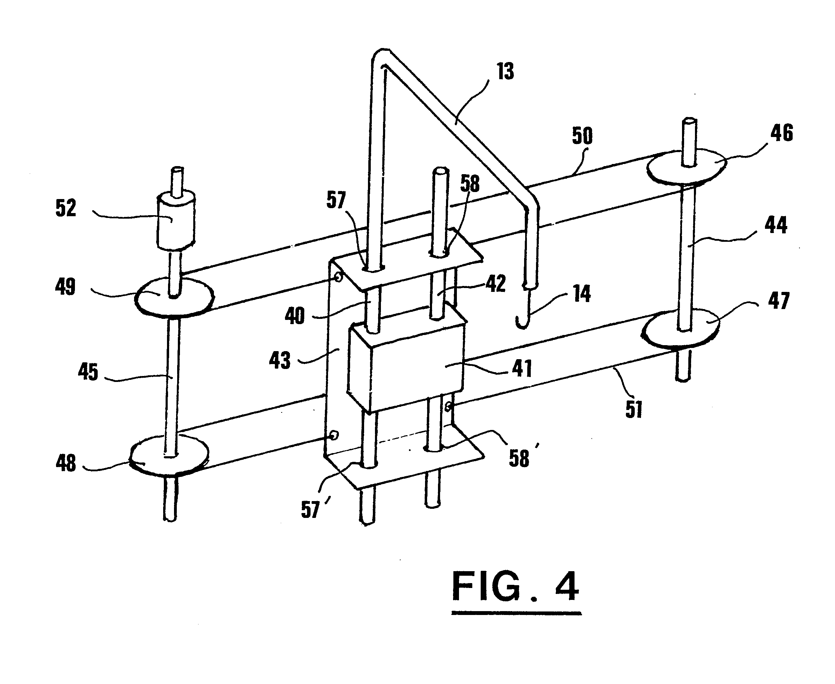

Dans la troisième forme de réalisation montrée aux figures 3 et 4, l'enceinte (1) est reliée par une paroi (4) au récipient (5) dans lequel le liquide (6) forme joint siphon (24,25). Selon la caractéristique originale de cette forme de réalisation, la portion (40) immergée du bras de manipulation (13) comporte un flotteur (41) qui est également fixé à un axe de guidage vertical parallèle (42), ces deux axes (40, 42) reliés entre eux grâce à un ensemble d'axes verticaux (44,45) portant des poulies (46,47,48,49) reliées par des courroies, câbles ou analogues (50,51). Comme on le comprend et voit sur la figure 3, cet ensemble est totalement immergé dans le liquide caractéristique (6). L'axe moteur (45) est entraîné en rotation grâce à un moteur (52) fixé sur la paroi (30) de l'enceinte (1).

Selon une variante importante de l'invention, l'extrémité libre (53) immergée, du bras de manipulation comporte un talon (54) destiné à coopérer avec une biellette (55) articulée en (56). En actionnant cette biellette (55), on contrôle la translation verticale du bras de manipulation (13) comme indiqué par la flèche en prenant appui sur le talon (54). On comprend aisément que grâce au flotteur (41), le bras de manipulation (13) est toujours rappelé en position haute. Cette disposition est avantageuse lorsque la charge (15) est appréciable, car on évite ainsi la plus grande flexibilité sur le bras (13).

En outre, grâce au système de flotteur immergé (41), en jouant sur l'adaptation du flotteur, on peut avoir un poids virtuel nul.

L'installation selon l'invention présente de nombreux avantages par rapport à ce qui était connu à ce jour. On peut citer :
- la facilité de construction ,
- une étanchéité parfaite sous une différence de pression limitée,
- une facilité de mise en oeuvre,
- des rotations sans limitation d'amplitude.

De la sorte, de telles installations peuvent être utilisées avec succès dans l'industrie nucléaire, en médecine, en biotechnologie ou dans l'industrie alimentaire et surtout dans la préparation et l'élaboration des plaquettes de semi-conducteurs.

**Revendications**

1/ Installation pour la manipulation d'un objet (15) sous atmosphère contrôlée comprenant :
. une enceinte (1) de traitement sous atmosphère contrôlée,
. un bras de manipulation (13) dudit objet (15) dans ladite enceinte (1), animé d'un mouvement selon au moins deux degrés de liberté,
et dans laquelle la dite enceinte (1) est fermée par un joint liquide (24,25) formant siphon, caractérisée :
- d'une part, en ce que tous les organes de commande (11,21,33,34,52) et de guidage (17,18) du bras de manipulation (13) sont situés à l'extérieur de l'enceinte (1) ;
- et d'autre part, en ce que le joint liquide (24,25) formant siphon est formé dans un récipient (5) dans lequel plonge un tube (4) relié à l'enceinte (1) et à travers lequel passe le bras de manipulation (13).

2/ Installation selon la revendication 1, caractérisée en ce que le récipient (5) est fixe et en ce que le bras (13) est animé d'un mouvement de translation horizontal (33,34) selon deux degrés de liberté (X,Y).

3/ Installation selon la revendication 1, caractérisée en ce que le récipient (5) pivote autour d'un axe vertical (8) et l'extrémité externe du bras (19) de manipulation (13) est associée à un vérin (21) à double effet fixé sur ledit récipient (5).

4/ Installation selon l'une des revendications 1 à 3, caractérisée en ce que le bras de manipulation (13) comporte un flotteur (41) immergé dans le récipient (5) destiné à maintenir le bras (13) en position haute.

5/ Installation selon la revendication 1, caractérisée en ce que le système du bras de manipulation (13) comprend :

. le bras (13) proprement dit définissant une portion verticale (40) immergée dans le récipient (5) à laquelle est fixé un flotteur (41),

. un axe de guidage vertical (42) également fixé au flotteur (41),

. un chariot (43) qui présente des orifices (57,58,57',58') de guidage pour la portion du bras (40) et l'axe de guidage (42),

. des moyens (46-51) pour entraîner ce chariot (43) en translation horizontale,

. un moyen (65) destiné à coopérer avec l'extrémité libre (53,54) soit de l'axe de guidage (42), soit du bras (13) pour contrôler la translation verticale du système.

0262057

FIG.1

0262057

**FIG. 2**

0262057

# FIG. 3

**FIG. 4**

Office européen des brevets

# RAPPORT DE RECHERCHE EUROPEENNE

Numero de la demande

EP 87 42 0237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 166 133 (HALL et al.) <br> * Colonne 2, lignes 23-38,56-72; colonne 3, ligne 1 - colonne 4, ligne 26 * <br> --- | 1 | B 25 J 21/00 <br> G 21 F 7/04 |
| A | GB-A-1 439 133 (THE SECRETARY OF STATE FOR DEFENCE) <br> --- | | |
| A | US-A-3 095 096 (CHESLEY) <br> --- | | |
| A | GB-A-2 171 075 (DEUTSCHE GESELLSCHAFT FÜR WIEDERAUFARBEITUNG VON KERNBRANDSTOFFEN mbH) <br> * Abrégé * <br> ----- | 2 | |

DOMAINES TECHNIQUES RECHERCHES (Int. Cl.4)

B 25 J
B 01 L
G 21 F

Le présent rapport a été établi pour toutes les revendications

| Lieu de la recherche | Date d'achèvement de la recherche | Examinateur |
|---|---|---|
| LA HAYE | 14-12-1987 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)